(19) **Europäisches Patentamt / European Patent Office / Office européen des brevets**

(11) **EP 1 960 736 B1**

(12) **FASCICULE DE BREVET EUROPEEN**

(45) Date de publication et mention
de la délivrance du brevet:
**26.05.2010 Bulletin 2010/21**

(21) Numéro de dépôt: **06819924.9**

(22) Date de dépôt: **07.12.2006**

(51) Int Cl.:
***G01C 19/56*** *(2006.01)*

(86) Numéro de dépôt international:
**PCT/EP2006/069437**

(87) Numéro de publication internationale:
**WO 2007/068649 (21.06.2007 Gazette 2007/25)**

(54) **GYROMETRE VIBRANT EQUILIBRE PAR UN DISPOSITIF ELECTROSTATIQUE**

DURCH EINE ELEKTROSTATISCHE EINRICHTUNG AUSGEGLICHENES
VIBRATIONSGYROMETER

VIBRATING GYROMETER EQUILIBRATED BY AN ELECTROSTATIC DEVICE

(84) Etats contractants désignés:
**CH DE FI GB LI**

(30) Priorité: **13.12.2005 FR 0512612**

(43) Date de publication de la demande:
**27.08.2008 Bulletin 2008/35**

(73) Titulaire: **THALES**
**92200 Neuilly sur Seine (FR)**

(72) Inventeur: **CHAUMET, Bernard**
**F-86100 Chatellerault (FR)**

(74) Mandataire: **Henriot, Marie-Pierre et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-2004/042324     US-A1- 2004 123 660**

- **YEH B Y ET AL: "Modelling and compensation of quadrature error for silicon MEMS microgyroscope" POWER ELECTRONICS AND DRIVE SYSTEMS, 2001. PROCEEDINGS., 2001 4TH IEEE INTERNATIONAL CONFERENCE ON, PISCATAWAY, NJ, USA,IEEE, vol. 2, 22 octobre 2001 (2001-10-22), pages 871-876, XP010571645 ISBN: 0-7803-7233-6**
- **CLARK W A ET AL: "SURFACE MICROMACHINED Z-AXIS VIBRATORY RATE GYROSCOPE" TECHNICAL DIGEST, IEEE SOLID-STATE SENSOR & ACTUATOR WORKSHOP, NEW YORK, NY, US, 3 juin 1996 (1996-06-03), pages 283-287, XP001028168**

**Description**

Le domaine de l'invention est celui des gyromètres vibrants.

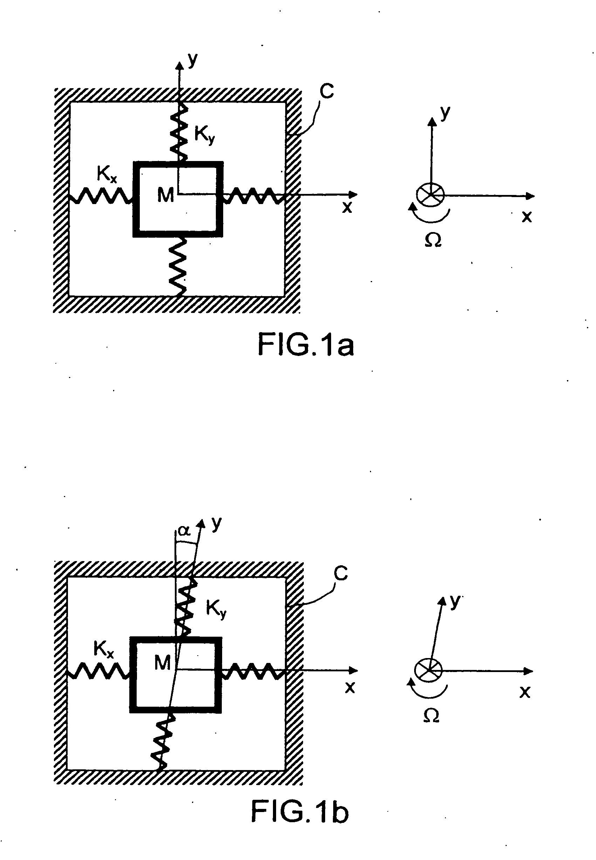

On rappelle le principe de fonctionnement d'un gyromètre vibrant en relation avec la figure 1a.

Une masse M est suspendue sur un cadre rigide C par l'intermédiaire de deux ressorts de raideur Kx et Ky. Elle possède donc deux degrés de liberté suivant les directions x et y perpendiculaires entre elles et situées dans le plan de la figure.

Le système peut être considéré comme un ensemble de deux résonateurs de fréquence propre Fx selon x et Fy selon y.

La masse M est excitée selon l'axe x à une fréquence f et avec une amplitude $x_0$ constante. Cette fréquence est généralement choisie égale à la fréquence propre du mode de vibration selon x. L'accélération de la masse M selon x, dite accélération d'excitation est alors de la forme :

$$\Gamma exc_x = -\omega^2 x_0 \sin(\omega t) \text{ avec } \omega = 2\pi f$$

En présence d'une vitesse de rotation $\Omega$ autour du troisième axe z, les forces de Coriolis provoquent un couplage entre les deux résonateurs engendrant une vibration de la masse selon l'axe y souvent appelé axe de détection. Une accélération dite accélération de Coriolis apparaît selon l'axe y :

$$\Gamma cor_x = 2\Omega \omega x_0 \cos(\omega t)$$

La mesure de la vitesse de rotation $\Omega$ est alors faite au travers de la mesure du mouvement selon y provoqué par l'accélération de Coriolis ; en effet, l'amplitude du mouvement selon y est proportionnelle à la vitesse de rotation $\Omega$.

Mais du fait des imperfections géométriques de la masse, les axes x et y présentent un défaut d'orthogonalité comme illustré figure 1 b. Du fait de ce défaut d'orthogonalité $\alpha$, l'accélération selon l'axe de détection y comporte non seulement l'accélération de Coriolis mais aussi une composante provenant de la projection sur y de l'accélération d'excitation :

$$\Gamma_y = 2\Omega \omega x_0 \cos(\omega t)\cos\alpha - \omega^2 x_0 \sin(\omega t)\sin\alpha$$

En supposant que $\alpha$ est très petit devant 1, on obtient :

$$\Gamma_y = 2\omega x_0 \left( \Omega \cos(\omega t) - \alpha \frac{\omega}{2} \sin(\omega t) \right)$$

Ainsi on constate qu'au terme $\Omega \cos((\omega t)$ représentant l'information utile à mesurer, se superpose un terme parasite $\alpha \dfrac{\omega}{2} \sin(\omega t)$. Ce terme 2 parasite, en quadrature de phase avec le terme utile, est généralement appelé biais en quadrature.

Le signal parasite étant en quadrature de phase avec le signal utile, il peut être éliminé par démodulation. Cependant la démodulation qui n'est pas parfaite comporte une erreur de phase $\Delta\Phi$ qui induit un biais sur la mesure de vitesse :

$$\Omega_{mes} \approx \Omega - \alpha \frac{\omega}{2} \Delta\phi$$

Pour obtenir une stabilité de 10°/h sur la mesure de vitesse, le terme $\alpha \frac{\omega}{2} \Delta\phi$ doit présenter une stabilité de 10°/h.

Pour une stabilité de la phase de 100µrad (soit 0.0057°), avec une fréquence $\omega = 2\pi \cdot 10000 \, rad/s$, le défaut d'orthogonalité $\alpha$ doit alors être inférieur à 15µrad pour que l'on puisse obtenir une stabilité de 10°/h.

Les défauts géométriques de l'élément sensible conduisent généralement à des défauts d'orthogonalité de quelques centaines de microradians.

Pour obtenir la précision recherchée sur la mesure de vitesse, il faut donc réduire le défaut d'orthogonalité, ce qui revient à compenser le biais en quadrature. Cette opération est souvent appelée équilibrage.

A performance de stabilité égale sur la mesure de vitesse, la réduction du biais en quadrature permet aussi de relâcher la précision de phase ΔΦ nécessaire.

L'opération d'équilibrage a donc deux objectifs : améliorer la précision sur la mesure de vitesse ou/et relâcher la précision de phase de l'électronique.

Une première méthode pour réaliser l'équilibrage ou l'orthogonalisation des axes d'excitation et de détection est d'enlever localement de la matière (ablation au laser par exemple) de manière à modifier la répartition de masse ou de raideur associées à la masse M. Cette méthode est généralement coûteuse à mettre en oeuvre et est difficilement applicable sur un gyromètre vibrant micro-usiné planaire dont les mouvements de détection et d'excitation sont situés dans le plan du substrat.

Une autre méthode consiste à déformer la masse mobile et éventuellement les éléments de raideur du mouvement de détection ou d'excitation de manière à ce que les mouvements d'excitation et de détection deviennent orthogonaux. Cette déformation statique peut alors être réalisée en appliquant des forces électrostatiques sur la masse ou sur ses éléments mobiles. Cette méthode est par exemple décrite dans le brevet WO2004042324.

Une dernière méthode consiste à utiliser un champ électrostatique, non pas pour déformer les éléments de raideur comme dans la méthode précédente, mais pour modifier la répartition de raideur du système à l'aide d'une raideur électrostatique. Ce type de méthode est couramment employé sur certains types de gyromètre vibrant comme les gyromètres à anneau ou à bol vibrant.

Le document 'YEH B Y ET AL: "Modelling and compensation of quadrature error for silicon MEMS microgyroscope" POWER ELECTRONICS AND DRIVE SYSTEMS, 2001, PROCEEDINGS, 4TH IEEE INTERNATIONAL CONFERENCE ON, PISCATAWAY, NJ, USA, IEEE, vol. 2, 22 octobre 2001 (2001-10-22), pages 871-876, XP010571645 ISBN: 0-7803-7233-6' décrit un gyromètre micro-usiné à structure planaire vibrante comportant une masse mobile pouvant vibrer dans le plan du substrat, comprenant un circuit de compensation du biais en quadrature basé sur une modélisation de la raideur du gyromètre sous forme matricielle et sur l'annulation des composantes non diagonales de la matrice résultante par l'intermédiaire d'une tension continue appliquée à deux paires d'électrodes capacitives dont les distances inter-électrodes sont identiques.

Le but de l'invention est de permettre de compenser le biais en quadrature d'un gyromètre vibrant micro-usiné planaire dont les mouvements de détection et d'excitation sont linéaires et situés dans le plan du substrat.

Plus précisément l'invention a pour objet un gyromètre à structure vibrante réalisé par micro-usinage dans une plaque mince, qui comporte un ensemble inertiel mobile comprenant au moins une masse mobile apte à vibrer dans le plan de la plaque selon un axe x d'excitation et selon un axe y de détection sensiblement perpendiculaire à l'axe x, un peigne de détection interdigité et un peigne d'excitation interdigité. Il est principalement caractérisé en ce qu'il comprend en outre au moins un peigne interdigité supplémentaire dit peigne de compensation du biais en quadrature, associé à la masse, et qui présente deux entrefers dissymétriques e et $\lambda$e, $\lambda$ étant un nombre réel positif, pour soumettre la masse, par l'application d'une tension V continue réglable sur ce peigne, à une raideur électrostatique de couplage entre l'axe x et l'axe y ; cette raideur ajustable permet de compenser le biais en quadrature.

Ce peigne de compensation du biais en quadrature permet de modifier la répartition de raideur du gyromètre sans déformer les éléments de raideur des mouvements d'excitation ou de détection.

Selon une caractéristique de l'invention, le ou les peignes de compensation du biais en quadrature sont disposés selon l'axe y de détection.

De préférence, l'ensemble inertiel mobile présentant un axe de symétrie parallèle à l'axe x, il comprend un deuxième peigne de compensation du biais en quadrature, les deux peignes de compensation étant disposés symétriquement par rapport à l'axe de symétrie et le deuxième peigne présente selon y deux entrefers symétriques des entrefers du premier peigne par rapport à cet axe de symétrie.

L'ensemble inertiel mobile présentant un axe de symétrie parallèle à l'axe y, il comprend éventuellement un troisième et un quatrième peignes de compensation du biais en quadrature, ces deux peignes de compensation étant respectivement symétriques des premier et deuxième peignes par rapport à l'axe de symétrie selon y ou par rapport à l'intersection de l'axe de symétrie parallèle à x et de l'axe de symétrie parallèle à y.

Selon une autre caractéristique de l'invention, l'ensemble inertiel mobile comprend une deuxième masse apte à vibrer selon l'axe y de détection, et éventuellement une troisième masse apte à vibrer en opposition de phase avec la deuxième masse selon l'axe y de détection.

L'ensemble inertiel mobile comprend avantageusement en outre au moins un peigne interdigité d'ajustement de la fréquence de détection, qui présente deux entrefers e identiques et qui est associé à une masse apte à vibrer selon l'axe y de détection.

Selon une caractéristique de l'invention, le peigne d'ajustement de la fréquence de détection est disposé selon l'axe y.

Avantageusement, l'ensemble mobile étant désigné premier ensemble mobile, il comprend un deuxième ensemble mobile qui comprend les mêmes éléments que le premier ensemble mobile, et une structure de couplage qui relie ces deux ensembles entre eux et permet un transfert d'énergie mécanique de vibration entre eux.

Le gyromètre est par exemple un gyromètre à simple ou double diapason.

D'autres caractéristiques et avantages de l'invention apparaîtront à la lecture de la description détaillée qui suit, faite à titre d'exemple non limitatif et en référence aux dessins annexés dans lesquels :

les figures 1a et 1b déjà décrites représentent schématiquement un gyromètre parfait et un gyromètre présentant un défaut d'orthogonalité,
les figures 2a, 2b et 2c représentent schématiquement des exemples de peignes de compensation du biais en quadrature et d'ajustement de fréquences, et les axes de vibration entre peigne fixe et peigne mobile,
les figures 3a et 3b représentent schématiquement des exemples de gyromètre selon l'invention, à deux masses,
la figure 4 représente schématiquement un exemple de gyromètre selon l'invention, à quatre masses, dit gyromètre à simple diapason,
la figure 5 représente schématiquement un exemple de gyromètre selon l'invention, à six masses, dit gyromètre à double diapason.

D'une figure à l'autre, les mêmes éléments sont repérés par les mêmes références.

Un gyromètre vibrant sans défaut peut être représenté comme un système dynamique comportant deux modes de vibrations orthogonaux de fréquences identiques, et parfaitement découplés. Ce système parfait est représenté figure 1a. La matrice de raideur dynamique Kdyn de ce système est une matrice de dimension 2x2 qui présente la propriété d'être diagonale.

Cette matrice est alors de la forme suivante :

$$[Kdyn] = -\omega^2 \begin{bmatrix} M_x & 0 \\ 0 & M_y \end{bmatrix} + \begin{bmatrix} K_x & 0 \\ 0 & K_y \end{bmatrix}$$

$M_x$ et $K_x$ représentent les masse et raideur effectives du mode de résonance selon x.

$M_y$ et Ky représentent les masse et raideur effectives du mode de résonance selon y.

$$\begin{bmatrix} M_x & 0 \\ 0 & M_y \end{bmatrix}$$

est la matrice de masse,

$$\begin{bmatrix} K_x & 0 \\ 0 & K_y \end{bmatrix}$$

est la matrice de raideur mécanique.

Le défaut d'orthogonalité $\alpha$ a pour effet de modifier les matrices de masse et de raideur de la manière suivante.

$$[Kdyn] = -\omega^2 \begin{bmatrix} M_x & 0 \\ 0 & M_y \end{bmatrix} + \begin{bmatrix} K_x & (-K_x\alpha) \\ (-K_x\alpha) & (K_y + K_x\alpha^2) \end{bmatrix}$$

On constate l'apparition de termes croisés proportionnels au défauts d'orthogonalité $\alpha$, à l'origine du biais en quadrature.

Le principe d'équilibrage est de modifier la matrice de raideur dynamique de manière à la rendre diagonale.

Ainsi dans le cas d'un équilibrage « électrique », à l'aide d'un dispositif électrostatique, on modifie la matrice de raideur dynamique en superposant une matrice de raideur électrostatique :

$$[Kdyn] = -\omega^2 \begin{bmatrix} M_x & 0 \\ 0 & M_y \end{bmatrix} + \begin{bmatrix} K_x & (-K_x\alpha) \\ (-K_x\alpha) & (K_y + K_x\alpha^2) \end{bmatrix} + \begin{bmatrix} k_x & k_{xy} \\ k_{xy} & k_y \end{bmatrix}$$

$$\begin{bmatrix} k_x & k_{xy} \\ k_{xy} & k_y \end{bmatrix}$$

étant la matrice de raideur électrostatique,

$k_x$ et $k_y$ étant des termes de raideur directe électrostatique, $k_{xy}$ étant un terme de raideur transverse ou de couplage électrostatique.

Le but de l'équilibrage électro-statique qui est donc de diagonaliser la matrice de raideur dynamique pour annuler le biais en quadrature, est obtenu lorsque $k_{xy} = K_x\alpha$.

Une fois que la diagonalisation de la matrice est réalisée, on peut aussi égaliser la fréquence de résonance des deux modes, ce qui est obtenu lorsque :

$$-\omega^2 M_x + K_x + k_x = 0 = -\omega^2 M_y + K_y + K_x\alpha^2 + k_y$$

soit:

$$\frac{K_x + k_x}{M_x} = \frac{K_y + K_x\alpha^2 + k_y}{M_y}.$$

L'annulation de l'écart de fréquence de résonance entre les deux modes n'est rigoureusement possible que lorsque la matrice de raideur est diagonale et donc que lorsque l'on a annulé le biais en quadrature.

Les termes de raideur directe électrostatique $k_x$ et $k_y$ sont par nature négatifs. Le terme $k_x$ a donc pour effet de diminuer la fréquence du mode x et le terme $k_y$ a donc pour effet de diminuer la fréquence du mode y.

Pour égaliser les fréquences, on agit sur la raideur $k_y$ si la fréquence du mode y est supérieure à celle du mode x et sur la raideur $k_x$ si la fréquence du mode x est supérieure à celle du mode y.

On va à présent présenter un moyen pour obtenir ces termes de raideur sur un gyromètre vibrant micro-usiné planaire dont les mouvements de détection et d'excitation sont linéaires et situés dans le plan du substrat. On rappelle au préalable la structure d'un tel gyromètre qui comprend une ou plusieurs masses mobiles.

Une plaque mince plane de silicium est usinée pour faire un gyromètre dont l'axe sensible est perpendiculaire au plan de la plaque désigné plan xy et dont les mouvements d'excitation et de détection sont situés dans le plan de la plaque.

Le silicium est choisi comme matériau préférentiel, d'une part pour ses propriétés mécaniques et d'autre part pour sa conductivité élevée lorsqu'il est suffisamment dopé par une impureté appropriée (du bore en général pour du silicium de type P).

L'épaisseur de la plaque de silicium d'origine est par exemple de quelques centaines de micromètres ; la plaque comporte d'une part des zones d'ancrage fixes formées dans cette épaisseur et d'autre part la structure vibrante proprement dite, libre par rapport aux zones d'ancrage et formée sur une épaisseur plus faible, par exemple sur une épaisseur de quelques dizaines de micromètres, isolée du reste de l'épaisseur de la plaque par un intervalle étroit. Sur cette épaisseur de quelques dizaines de micromètres, la plaque de silicium est découpée par micro-usinage selon les motifs des masses mobiles et peignes interdigités désirés.

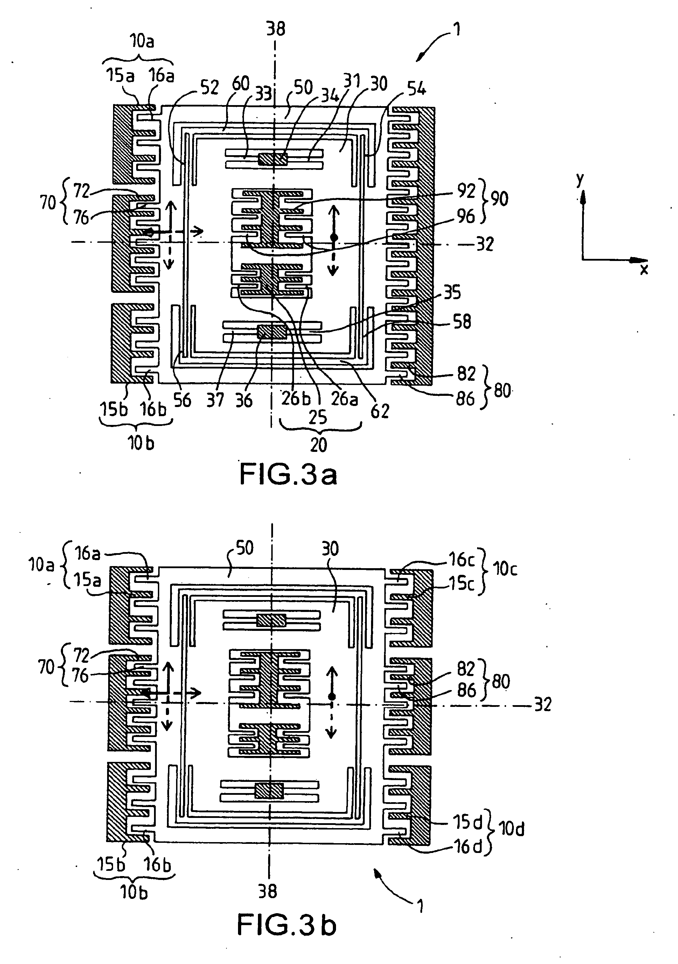

L'usinage de la structure peut être réalisé en utilisant comme substrat d'origine un substrat de silicium sur isolant, mais d'autres méthodes sont également possibles. Un substrat en silicium sur isolant est constitué d'un substrat de silicium de quelques centaines de micromètres d'épaisseur qui porte sur sa face avant une fine couche d'oxyde de silicium elle-même recouverte d'une couche de silicium monocristallin de quelques dizaines de micromètres d'épaisseur. L'usinage consiste à attaquer le silicium du substrat par sa face avant, selon les motifs de surface désirés, au moyen de techniques de photogravure en usage en microélectronique, jusqu'à atteindre la couche d'oxyde, avec un produit de gravure sélectif qui attaque le silicium sans attaquer significativement l'oxyde. On arrête la gravure lorsque la couche d'oxyde est mise à nu. Cette couche d'oxyde est ensuite enlevée par attaque sélective avec un autre produit de manière à ne conserver que la couche superficielle de silicium monocristallin, sauf à l'endroit des zones d'ancrage où la couche d'oxyde subsiste et forme une liaison solidaire entre le substrat et la couche superficielle de silicium monocristallin. L'usinage par la face avant définit les différents découpages des parties mobiles. Ce sont donc ces motifs de surface, zones d'ancrage et découpages des parties mobiles, que l'on voit sur les figures 3 à 5.

Le silicium conducteur permet de réaliser les fonctions électriques du gyromètre et notamment les fonctions d'excitation et les fonctions de détection ; ces fonctions sont réalisées de préférence par des peignes d'excitation et de détection. Ce sont des peignes capacitifs à électrodes interdigitées alimentées en courant ou en tension électrique. Un peigne comprend un demi-peigne fixe et un demi-peigne mobile. La partie fixe d'un peigne est fixée à une zone d'ancrage formant également accès électrique pour la transmission de signaux électriques à cette partie fixe ou depuis cette partie fixe ; la partie mobile du peigne est fixée à un élément mobile de la structure d'excitation ou de la structure de détection ; la ou les zone(s) d'ancrage de ta masse mobile forment un accès électrique à la partie mobile du peigne, à travers l'ensemble de la structure vibrante.

Les dents ou doigts du demi-peigne fixe, en silicium conducteur usiné en même temps que les autres éléments du gyromètre, constituent la première armature d'une capacité et les dents ou doigts du demi-peigne mobile, également en silicium conducteur, constituent la deuxième armature de cette capacité.

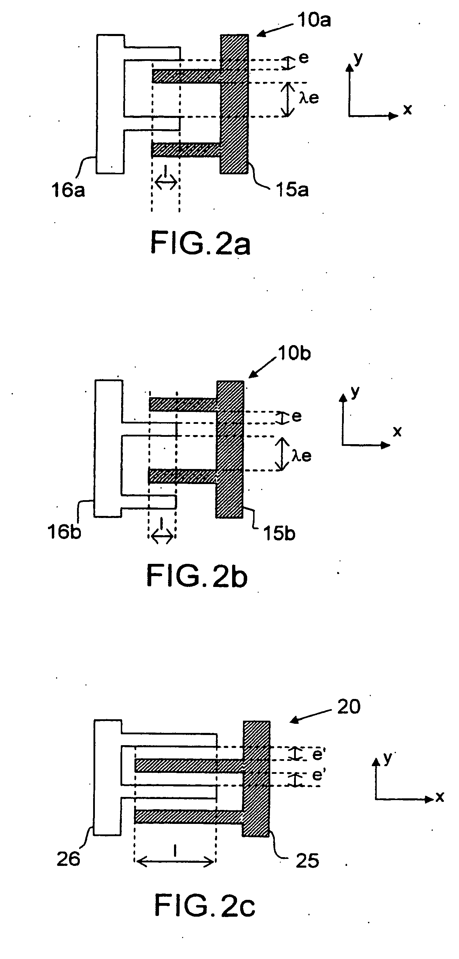

Le gyromètre selon l'invention comprend en plus des peignes d'excitation et de détection, un peigne 10a de compensation du biais en quadrature représenté figure 2a. En effet, le terme de raideur $k_{xy}$, qui permet de compenser le biais en quadrature, est obtenu au moyen d'un ensemble de demi-peignes interdigités dont l'un 16a est mobile, l'autre 15a fixe. L'interdigitation des peignes aussi désignée entrefer est dissymétrique au repos, les doigts d'un demi-peigne n'étant pas exactement au milieu de l'intervalle entre deux doigts de l'autre demi-peigne ; on a au repos des entrefers dissymétriques e et $\lambda e$, $\lambda$ étant un réel positif.

Le demi-peigne mobile 16a est solidaire de la masse apte à vibrer selon x et selon y. C'est donc la masse qui assure le couplage de Coriolis. Les flèches indiquent le mouvement possible selon x ou selon y entre peigne fixe 15a et peigne mobile 16a.

Les termes de raideur électrostatique créés par un tel peigne sont les suivants :

$$k_{xq}=0$$

$$k_{yq} = -n\varepsilon \cdot V^2 \cdot \frac{h \cdot l}{e^3}\left(1 + \frac{1}{\lambda^3}\right) \qquad k_{xyq} = \frac{n\varepsilon \cdot V^2}{2}\frac{h}{e^2}\left(1 - \frac{1}{\lambda^2}\right)$$

l'indice q signifiant que le terme de raideur est provoqué par le peigne de compensation de la quadrature,

n étant le nombre de dents par demi-peigne,

h l'épaisseur du peigne qui est aussi celle de la plaque de silicium,

l la longueur de recouvrement.

V la tension continue entre chaque peigne,

$\varepsilon$ la permittivité du vide.

Selon une variante, le demi-peigne fixe comprend n dents et le demi-peigne mobile n-1 dents.

Ce type de peigne permet donc de créer essentiellement une raideur de couplage $k_{xyq}$. Cette raideur de couplage qui est positive, est ajustée en fonction de V de manière à obtenir $k_{xyq} = K_x\alpha$, c'est-à-dire pour compenser le biais en quadrature égal à $\alpha\dfrac{\omega}{2}$.

Comme le biais à compenser peut avoir un signe quelconque, on prévoit un autre peigne, symétrique du précédent par rapport à un axe de symétrie du gyromètre selon x, pour créer un terme de raideur négatif. Un exemple de ce peigne 10b symétrique du précédent est représenté figure 2b. Il comprend un demi-peigne mobile 16b, et un demi-peigne fixe 15b. Au repos, les entrefers e et $\lambda$e sont dissymétriques.

Par exemple pour une fréquence d'excitation $\omega = 2\pi \cdot 8000\,rad/s$, une masse $Mx = My = 1$ $\mu$gramme et un défaut d'orthogonalité maximum $\alpha$ de 200$\mu$rad, le biais en quadrature à compenser, exprimé en °/s est alors au maximum de 288°/s.

Pour compenser ce biais en quadrature il faut créer une raideur électrostatique de couplage $k_{xyq} = K_x\alpha = M_x\omega_x^2\alpha = 0.5\,N/m$.

Avec un peigne électrostatique de compensation dont les caractéristiques sont n=100 dents, e= 3$\mu$m, h=100$\mu$m, $\lambda$=3,

il suffit alors d'appliquer une tension continue V=10.6 Volts pour créer une raideur électrostatique de couplage de 0.5N/m et donc pour compenser le défaut d'orthogonalité de 200$\mu$rad.

L'application de la tension continue sur les peignes de compensation de la quadrature crée non seulement une raideur de couplage $k_{xyq}$ mais également une raideur électrostatique directe $k_{yq}$ qui a pour effet de diminuer la fréquence du mode y. Cette diminution de fréquence peut être gênante si elle rend l'écart de fréquence Fy-Fx négatif car alors il devient ensuite impossible d'annuler cet écart de fréquence par le peigne d'ajustement de la fréquence Fy.

Mais on peut choisir la longueur de recouvrement du peigne d'ajustement de la quadrature de telle sorte que le terme de raideur directe $k_{yq}$ soit suffisamment faible pour que l'écart de fréquence Fy-Fx entre le mode de détection et le mode d'excitation reste toujours positif lorsque l'on applique la tension V destinée à compenser le biais en quadrature.

On reprend l'exemple précédent, avec un écart de fréquence nominal de 200 Hz entre les deux modes et des dispersions de fabrication provoquant un écart maximum de $\pm$100Hz d'un gyromètre à l'autre. Le choix d'une longueur de recouvrement l=50$\mu$m conduit à une raideur directe $k_{yq}$=-20 N/m pour une raideur de couplage $k_{xyq}$=0.5N/m. La diminution de fréquence induite par cette raideur est alors au maximum de 30 Hz. L'écart de fréquence Fy-Fx entre mode de détection et d'excitation reste donc toujours positif puisqu'il est égal au minimum à 200-100-30=20Hz et au maximum à 200+100-30=320Hz.

Une fois le biais en quadrature compensé, l'ajustement final de l'écart de fréquence est réalisé par un peigne supplémentaire désigné peigne d'ajustement de la fréquence 20, dont un exemple est représenté figure 2c. L'ajustement de l'écart de fréquence Fy-Fx, qui est toujours positif avant ajustement est réalisé par une diminution de la fréquence Fy. Cette diminution est provoquée par l'introduction d'une raideur électrostatique $k_{yl}$ par nature toujours négative. L'indice f signifie que les termes de raideur sont provoqués par le peigne d'ajustement de la fréquence. On a $k_y = k_{yq} + k_{yf}$.

Le terme de raideur $k_{y1}$ est obtenu par un ensemble de demi-peignes interdigités, dont l'un 26 est mobile, l'autre 25 fixe. Au repos, les entrefers e' sont symétriques : les doigts d'un demi-peigne sont au milieu de l'intervalle entre les doigts de l'autre demi-peigne. Le demi-peigne mobile est solidaire de la masse apte à vibrer selon y. La flèche indique le mouvement possible selon y entre peigne fixe 25 et peigne mobile 26.

Les termes de raideur électrostatique créés par ce peigne d'ajustement final de l'écart de fréquence, sont les suivants :

$$k_{xf} = 0 \qquad k_{xy} = -2n\varepsilon \cdot V^2 \cdot \frac{h \cdot l}{e^3} \qquad k_{xy} = 0$$

Ainsi ce type de peigne permet de diminuer la raideur selon y en fonction de la tension V sans modifier la raideur $k_x$ et sans introduire de raideur de couplage $k_{xy}$.

Dans le cas d'un gyromètre avec une seule masse, cette masse étant apte à vibrer selon x et y, comme l'exemple de gyromètre de la figure 1b, le peigne de compensation du biais en quadrature et celui d'ajustement de la fréquence sont donc associés à la même masse.

En réalité, la structure vibrante d'un gyromètre vibrant micro-usiné planaire dont les mouvements de détection et d'excitation sont linéaires et situés dans le plan du substrat, comporte généralement deux, quatre, six ou huit masses.

Parmi l'ensemble de ces masses, certaines sont aptes à vibrer selon x et y, et d'autres selon x uniquement ou selon y uniquement.

Les masses aptes à vibrer à la fois selon les deux axes x et y assurent le couplage de Coriolis entre l'axe d'excitation et l'axe de détection. C'est sur ces masses qu'est fixée la partie mobile des peignes permettant la compensation du biais en quadrature par le contrôle de la raideur de couplage $k_{xy}$.

La partie mobile des peignes assurant l'ajustement de la fréquence Fy du mode de détection par le contrôle de la raideur $k_y$ doit être solidaire des masses aptes à vibrer selon y, qui peuvent être éventuellement les mêmes que celles aptes à vibrer selon x et y.

On va à présent décrire un exemple de gyromètre selon l'invention à deux masses mobiles.

Les figures 3 donnent une disposition parmi d'autres des différents peignes sur un tel gyromètre.

L'ensemble mobile inertiel 1 de ce gyromètre comporte comme première masse mobile, un cadre inertiel et comme seconde masse mobile, une masse inertielle mobile centrale.

La masse inertielle mobile aussi désignée masse de détection 30 ne peut se déplacer que selon une direction de détection, par exemple Oy (axe vertical dans le plan de la figure) ; le cadre inertiel 50 peut se déplacer selon l'axe Ox et selon l'axe Oy. L'axe sensible du gyromètre est un axe Oz perpendiculaire au plan de la plaque. On excite une vibration du cadre inertiel 50 dans la direction Ox ; lorsque le gyromètre tourne autour de son axe sensible Oz, une vibration du cadre est engendrée selon l'axe Oy. Cette vibration selon Oy est transmise à la masse 30, alors que la vibration selon Ox n'est pas transmise. Comme on le verra, une structure d'excitation de la vibration est associée au cadre 50, et une structure de détection de vibration est associée à la masse inertielle de détection 30.

Comme on le voit sur ces figures 3, la masse de détection 30 est reliée à des zones d'ancrage fixes par au moins deux bras de flexion conçus pour autoriser un déplacement de la masse selon Oy mais pour empêcher tout mouvement significatif de la masse dans la direction Ox. Ces bras sont de préférence situés de part et d'autre d'un axe de symétrie 32 de la masse, parallèle à Ox. Il y a alors deux zones d'ancrage 34 et 36 situées de part et d'autre de la masse de détection, symétriques par rapport à cet axe de symétrie 32. De plus, ces zones sont de préférence situées sur un autre axe de symétrie 38 de la masse, axe qui est parallèle à Oy. Les bras de flexion qui relient la masse 30 aux zones 34 et 36 sont des bras allongés dans la direction Ox, de manière à présenter une grande raideur (grande résistance à l'allongement) dans cette direction. Il y a de préférence quatre bras de flexion plutôt que deux, la masse étant reliée à la zone d'ancrage 34 par deux bras 31 et 33 de part et d'autre de la zone 34 ; la masse est reliée par ailleurs à la deuxième zone d'ancrage 36 par deux bras 35 et 37 de part et d'autre de la zone 36.

Le cadre mobile 50 entoure de préférence complètement la masse 30. La masse 30 est reliée au cadre 50 par au moins deux bras de flexion qui ont pour particularité de présenter une très grande raideur (très grande résistance à l'allongement) dans la direction Oy et une faible raideur dans la direction Ox. Ces bras sont allongés dans la direction Oy et ont une largeur faible devant leur longueur, afin de présenter cette différence de raideurs.

Il y a de préférence quatre bras de flexion de ce type entre la masse 30 et le cadre 50, les bras étant situés en pratique chacun à un coin de la masse de détection si elle est de forme généralement rectangulaire. Ils sont disposés symétriquement d'une part par rapport à l'axe de symétrie 32 de la masse (axe parallèle à Ox) et d'autre part par rapport à l'axe de symétrie 38 (parallèle à Oy).

Ces bras sont désignés par les références 52, 54, 56, 58. Ils ont de préférence une forme repliée en U. Les deux branches repliées du U sont allongées parallèlement à Oy et sont reliées entre elles par un court élément de liaison. Les bras 52 à 58 pourraient cependant ne pas être repliés et s'étendre en totalité selon la direction Oy entre le cadre et la masse. Le repliement permet de gagner de la place sans modifier significativement les caractéristiques mécaniques désirées.

Si les bras sont repliés comme sur les figures 3, il est préférable de relier par ailleurs l'élément court de liaison (qui relie les deux branches du U) d'un premier bras 52 à l'élément court correspondant du bras 54 qui est symétrique du bras 52 par rapport à l'axe 38. Une traverse 60 est prévue à cet effet, parallèle à Ox, pour relier le fond du U du bras de liaison 52 au fond du U du bras de flexion 54, les bras 52 et 54 étant symétriques par rapport à l'axe 38. Une traverse similaire 62, symétrique de la traverse 60 par rapport à l'axe 32, relie les éléments symétriques 56 et 58. Ces traverses 60 et 62, parallèles à Ox, renforcent la symétrie de transmission d'un mouvement selon Oy imposé par le cadre mobile 50 à la masse 30. Elles ne sont pas présentes si les bras 52, 54, 56, 58 n'ont pas une forme repliée car dans ce cas les extrémités des bras 52 et 54 seraient déjà reliées rigidement par le cadre 50 lui-même.

Comme on le voit sur les figures 3, la forme repliée en U allongé des bras de flexion entre le cadre mobile 50 et la masse de détection 30 est obtenue par des découpes dans le cadre mobile et dans la masse de détection, mais de manière générale, les bras de flexion partent à peu près d'un coin intérieur du cadre vers un coin en vis-à-vis de la masse même si le point de fixation effectif du bras sur le cadre ou sur la masse ne part pas exactement de ce coin. On peut considérer que la masse est suspendue globalement par ses quatre coins au cadre mobile.

Le cadre 50 est excité en vibration selon Ox par une première structure en pigne interdigité 70 à entrefers symétriques, qui comporte un demi-peigne fixe 72, attaché à une zone d'ancrage et un demi-peigne mobile 76 constitué le long d'un premier côté (parallèle à Oy) du cadre 50. Classiquement, la structure en peigne agit comme excitateur du mouvement de la partie mobile grâce aux forces d'attraction qui s'exercent entre les doigts en regard lorsqu'une tension est appliquée entre les demi-peignes. La tension d'excitation est alternative pour engendrer un mouvement de vibration, et la fréquence de cette tension est choisie très proche de ou égale à la fréquence de résonance mécanique de la structure. La tension d'excitation est appliquée entre la zone d'ancrage du demi-peigne et l'une et/ou l'autre des zones d'ancrage 34 et 36. Le demi-peigne fixe 72 est en contact électrique direct (par le corps du silicium conducteur) avec sa zone d'ancrage ; le demi-peigne mobile 76 est en contact avec les zones d'ancrage 34 et 36 par l'intermédiaire des bras de flexion 52 à 58, du corps de la masse de détection, des bras de flexion 40 à 46, et du cadre 50, de sorte qu'en appliquant une tension entre la zone d'ancrage du demi-peigne et les zones d'ancrage 34 ou 36 on applique bien une tension entre la partie fixe et la partie mobile du peigne 70.

Le mouvement d'excitation engendré sur le cadre 50 est selon la direction Ox, les peignes agissant par modification de la surface en recouvrement mutuel des doigts intercalés.

Le microgyromètre comporte de préférence une autre structure à peignes interdigités associée au cadre, symétrique de la structure 70 par rapport à l'axe 38. Elle comporte un demi-peigne fixe 82 attaché à une zone d'ancrage, et un demi-peigne mobile 86 usiné le long d'un côté du cadre 50. Cette structure à entrefers symétriques peut servir de détecteur du mouvement du cadre selon Ox. Elle est utile pour l'asservissement du mouvement excité par le peigne 70 ; l'asservissement est en général utile pour ajuster la fréquence d'excitation par rapport à la fréquence de résonance de la structure. Les tensions détectées par la structure 80 apparaissent entre la zone d'ancrage du demi-peigne et les zones d'ancrage 34 et 36.

Au moins un peigne interdigité est associé à la masse de détection 30 pour détecter le mouvement de la masse de détection dans la direction Oy. L'orientation de ces peignes dépend du principe sur lequel repose la détection : si la détection repose sur une mesure des variations de surface en recouvrement mutuel des doigts des demi-peignes fixe et mobile, le peigne de détection des mouvements selon Oy est disposé perpendiculairement au peigne d'excitation 70 (qui repose aussi sur des variations de surface en recouvrement). Mais si la détection repose sur une mesure des variations d'espacement entre les doigts du demi-peigne fixe et du demi-peigne mobile, le peigne de détection est disposé parallèlement au peigne d'excitation. La détection par la variation de l'espacement entre doigts est préférée car elle est plus sensible. L'entrefer est alors dissymétrique au repos, les doigts d'un demi-peigne n'étant pas exactement au milieu de l'intervalle entre deux doigts de l'autre demi-peigne, alors qu'un peigne fonctionnant (comme le peigne d'excitation) sur la base de variations de surfaces en recouvrement a les doigts d'un demi-peigne au milieu de l'intervalle entre les doigts de l'autre demi-peigne.

C'est le cas sur les figures 3 : le peigne de détection 90 est disposé avec la même orientation générale que les peignes 70 et 80, bien qu'il soit associé à un mouvement selon Oy alors que les peignes 70 et 80 sont associés à un mouvement (excitation ou détection) selon Ox. Il est disposé au centre de la masse le long de l'axe 38.

Le peigne 90 comporte un demi-peigne fixe 92 attaché à une zone d'ancrage et un demi-peigne mobile 96 faisant partie de la masse de détection elle-même. La masse de détection comporte une découpe pour laisser la place au peigne fixe 92 et à sa zone d'ancrage, et les bords de cette découpe sont découpés en forme de doigts pour constituer le demi-peigne mobile 96 dans lequel viennent s'intercaler les doigts du demi-peigne fixe. Dans l'exemple représenté, le peigne 90 est double, c'est-à-dire que le demi-peigne fixe 92 situé sur l'axe 38 comporte des doigts de part et d'autre de l'axe de symétrie 38 et les deux côtés de la découpe de la masse 30 sont pourvus de doigts pour former deux demi-peignes mobiles 96a et 96b situés de part et d'autre de l'axe 38.

Pour la détection du mouvement selon Oy, un circuit électronique associé à cette structure détecte la modulation en amplitude des tensions électriques présentes entre la zone d'ancrage du, demi-peigne et les zones d'ancrage 34 et 36. Cette modulation n'est due qu'à un déplacement de la masse de détection selon l'axe Oy puisque la masse ne peut se déplacer que selon cet axe.

Selon l'invention, un peigne 10a de compensation du biais en quadrature tel que décrit en relation avec la figure 2a est ajouté à ce gyromètre. Il est associé au cadre 50 apte à vibrer selon x et selon y : le demi-peigne mobile 16a est solidaire de cette masse 50 et le demi-peigne fixe 15a est attaché à une zone d'ancrage. Il est disposé le long d'un premier côté (parallèle à Oy) du cadre 50 dans le prolongement du peigne 70 d'excitation du mouvement selon x.

Ce peigne de compensation du biais en quadrature permet de modifier l'orthogonalité entre le mouvement de détection est d'excitation en modifiant la raideur de couplage entre l'axe de détection et d'excitation, ceci sans déformer les éléments de raideur des mouvements d'excitation ou de détection.

Comme les défauts à compenser peuvent avoir un signe quelconque, on prévoit un autre peigne 10b tel que décrit en relation avec la figure 2b pour créer un terme de raideur de signe opposé à celui créé par le peigne 10a. Ces deux peignes de compensation 10a et 10b sont disposés symétriquement par rapport à l'axe 32 et les entrefers e et $\lambda$e du premier peigne sont symétriques des entrefers de ce deuxième peigne par rapport à cet axe 32.

Comme indiqué sur la figure 3b, on peut aussi prévoir des peignes de compensation du biais en quadrature 10c et 10d disposés sur l'autre côté parallèle à Oy. Ils sont alors symétriques des peignes 10a et 10b par rapport à l'axe 38 ou bien peuvent aussi être symétriques des peignes 10a et 10b par rapport au point d'intersection des axes 38 et 32.

De préférence, un peigne 20 d'ajustement de la fréquence Fy tel que décrit en relation avec la figure 2c est ajouté à ce gyromètre des figures 3a ou 3b. Il est associé à la masse 30 apte à vibrer selon y. Il est disposé au centre de la masse 30 le long de l'axe 38, dans le prolongement du peigne 90 de détection. Il comprend un demi-peigne fixe 25 attaché à une zone d'ancrage et un demi-peigne mobile 26 faisant partie de la masse de détection elle-même. La masse de détection comporte une découpe pour laisser la place au peigne fixe 25 et à la zone d'ancrage, et les bords de cette découpe sont découpés en forme de doigts pour constituer le demi-peigne mobile 26 dans lequel viennent s'intercaler les doigts du demi-peigne fixe. Dans l'exemple représenté, le peigne 20 est double, c'est-à-dire que le demi-peigne fixe 25 situé sur l'axe 38 comporte des doigts de part et d'autre de l'axe de symétrie 38 et les deux côtés de la découpe de la masse 30 sont pourvus de doigts pour former deux demi-peignes mobiles 26a et 26b situés de part et d'autre de l'axe 38.

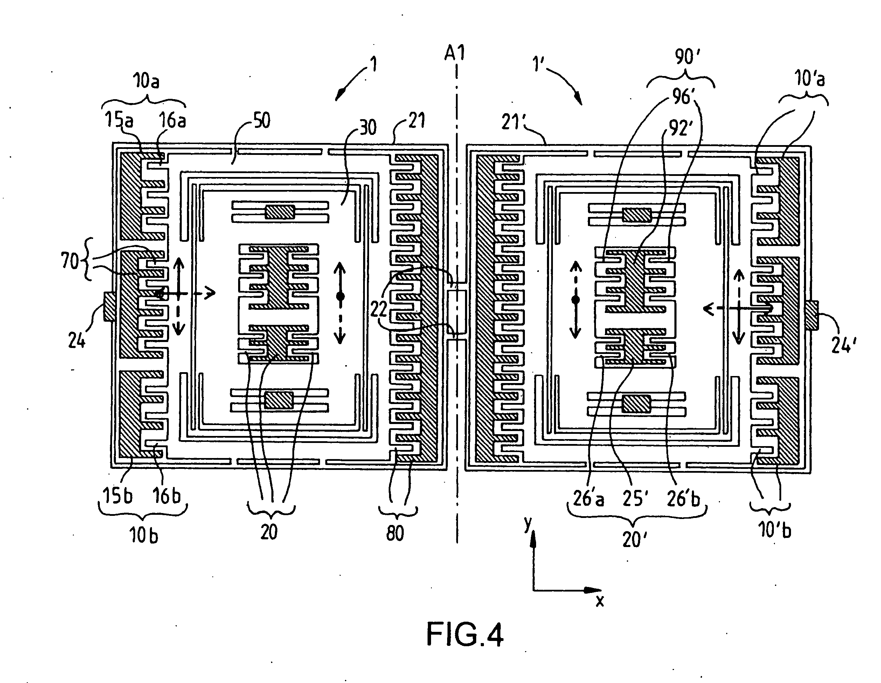

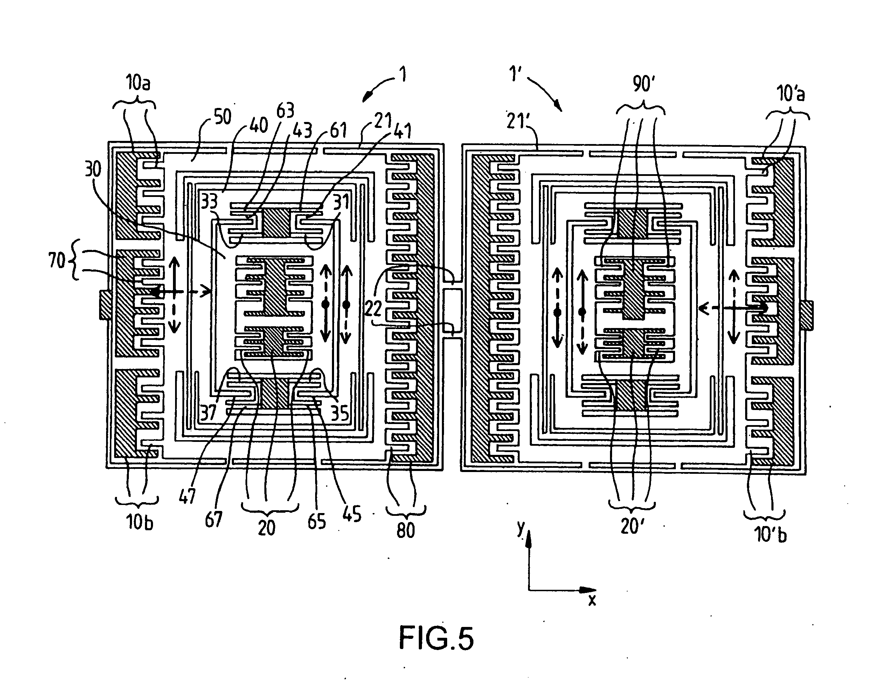

Selon un autre mode de réalisation de l'invention, des peignes de compensation du biais en quadrature et d'ajustement de fréquence sont réalisés sur un gyromètre à diapason dont deux exemples sont représentés figures 4 et 5.

Une structure de gyromètre de type diapason est une structure symétrique comportant deux ensembles inertiels mobiles 1 et 1' vibrant en opposition de phase, ces ensembles mobiles étant reliés entre eux par une structure de couplage servant à transmettre sans pertes, d'un ensemble à l'autre, les énergies mécaniques de vibration des deux ensembles pour mettre en opposition de phase ces vibrations. La symétrie de la structure est une symétrie par rapport à un axe A1 parallèle à l'axe x, avec un ensemble mobile de chaque côté de cet axe.

La structure de couplage est constituée de préférence par deux cadres extérieurs rectangulaires 21 et 21' à l'intérieur desquels sont situés les ensembles inertiels mobiles. Les cadres 21 et 21' sont reliés entre eux par une courte barre de liaison 22 pouvant être considérée comme rigide. La barre de liaison 22 relie le milieu d'un côté du premier cadre au milieu d'un côté adjacent du deuxième cadre. Elle constitue un centre de symétrie de toute la structure ; elle est perpendiculaire à l'axe A1 et centrée sur cet axe. La barre de liaison courte 22 peut être une double barre également centrée sur l'axe A1 comme dans les exemples des figures 4 et 5.

Les cadres extérieurs 21 et 21' de la structure de couplage entourent les deux ensembles mobiles en principe par au moins trois côtés et ils sont reliés à ces deux ensembles de préférence le long de côtés perpendiculaires à l'axe de symétrie générale A1. Les cadres 21 et 21' peuvent (facultativement) être fixés chacun à une zone d'ancrage 24, 24' située au milieu d'un côté opposé au côté relié à la barre de liaison 22. Dans ce cas, les cadres 21 et 21' entourent complètement chacun un ensemble mobile inertiel respectif. La barre de liaison centrale 22 et les autres côtés des cadres 21 et 21' ne sont pas reliés à des zones d'ancrage fixes.

On distingue parmi les gyromètres à diapason, les gyromètres à simple diapason et les gyromètres à double diapason.

Chaque ensemble inertiel mobile 1 et 1' d'un gyromètre à simple diapason est par exemple tel que celui décrit en relation avec les figures 3. Les éléments de l'ensemble inertiel mobile 1' portent les mêmes références que celles de l'ensemble 1, assorties du signe 'prime'.

Chaque ensemble inertiel 1 et 1' d'un gyromètre à double diapason décrit en relation avec la figure 5, comporte par exemple une masse inertielle mobile centrale 30, un cadre inertiel intermédiaire interne 40 qui l'entoure et un cadre inertiel intermédiaire externe 50 qui entoure le cadre interne 40 et qui est donc situé entre le cadre intermédiaire interne 40 et le cadre extérieur 21.

La masse centrale 30 que l'on désigne par masse de détection et le cadre intermédiaire interne 40 ne peuvent se déplacer que selon une direction Oy (axe vertical dans le plan de la figure) ; le cadre intermédiaire externe 50 peut se déplacer selon l'axe Oy et selon l'axe Ox. L'axe sensible du gyromètre est l'axe Oz. On excite une vibration du cadre intermédiaire inertiel externe 50 dans la direction Ox ; lorsque le gyromètre tourne autour de son axe sensible Oz, une vibration du cadre intermédiaire externe 50 est engendrée selon l'axe Oy. Cette vibration selon Oy est transmise au cadre intermédiaire interne 40, alors que la vibration selon Ox n'est pas transmise : la vibration selon Oy du cadre intermédiaire interne 40 est en phase avec celle du cadre intermédiaire externe 50. La vibration selon Oy du cadre intermédiaire interne 40 est transmise à la masse 30 : la vibration selon Oy de la masse 30 est en opposition de phase avec celle du cadre interne 40 et d'amplitude proportionnelle au mouvement de vibration du cadre interne 40.

Le mouvement de détection est ainsi équilibré au sein de chacun des deux ensembles mobiles du fait que le mouvement de la masse de détection 30 contrebalance le mouvement des cadres intermédiaires interne 40 et externe 50.

La masse centrale 30 est reliée à la zone d'ancrage 34 par deux bras 31 et 33 et à la deuxième zone d'ancrage 36 par deux bras 35 et 37 ; le cadre intermédiaire externe 50 est relié au cadre intermédiaire interne 40 par quatre bras de flexion désignés par les références 52, 54, 56, 58 comme déjà décrit dans l'exemple de la figure 3.

Le cadre intermédiaire interne 40 est relié à la masse centrale 30 par quatre bras de flexion 41, 43, 45, 47 de préférence repliés en U, disposés symétriquement par rapport aux axes de symétrie 32 et 38 ; d'autres bras de flexion 61, 63, 65, 67 relient ce cadre intermédiaire 40 aux zones d'ancrage 34 et 36. Ces bras présentent une grande raideur selon l'axe x et une faible raideur selon l'axe y.

Les peignes d'excitation 70, de détection du mouvement d'excitation 80, et de compensation du biais 10a et 10b sont associés au cadre intermédiaire externe 50 comme déjà décrit précédemment avec les exemples des figures 2 et 3. Le peigne de détection 90 et d'ajustement de la fréquence 20 sont associés à la masse centrale 30 comme déjà décrit précédemment.

## Revendications

1. Gyromètre à structure vibrante réalisé par micro-usinage dans une plaque mince, qui comporte un ensemble inertiel mobile (1) comprenant au moins une masse mobile (50) apte à vibrer dans le plan de la plaque selon un axe x d'excitation et selon un axe y de détection sensiblement perpendiculaire à l'axe x, un peigne de détection (90) interdigité et un peigne d'excitation (70) interdigité, **caractérisé en ce qu'**il comprend en outre au moins un peigne interdigité (10a) supplémentaire dit peigne de compensation du biais en quadrature, associé à la masse (50) et qui présente deux entrefers dissymétriques e et λe, λ étant un nombre réel positif, pour soumettre celle-ci, par l'application d'une tension V continue réglable sur ce peigne, à une raideur électrostatique de couplage entre l'axe x et l'axe y ajustable permettant de compenser le biais en quadrature du gyromètre.

2. Gyromètre selon la revendication précédente, **caractérisé en ce que** le ou les peignes (10a) de compensation du biais en quadrature sont disposés selon l'axe y.

3. Gyromètre selon l'une quelconque des revendications précédentes, **caractérisé en ce que** l'ensemble inertiel mobile (1, 1') présentant un axe de symétrie (32) parallèle à l'axe x, il comprend un deuxième peigne de compensation du biais en quadrature (10b), les deux peignes (10a, 10b) de compensation étant disposés symétriquement par rapport à l'axe de symétrie (32) et **en ce que** le deuxième peigne (10b) présente selon y deux entrefers symétriques des entrefers du premier peigne par rapport à l'axe de symétrie.

4. Gyromètre selon la revendication précédente, **caractérisé en ce que** l'ensemble inertiel mobile (1, 1') présentant un axe de symétrie (38) parallèle à l'axe y, il comprend un troisième et un quatrième peignes de compensation du biais en quadrature (10c, 10d), ces deux peignes (10c, 10d) de compensation étant respectivement symétriques des premier et deuxième peignes (10a, 10b) par rapport à l'axe de symétrie parallèle à y (38).

5. Gyromètre selon la revendication 3, **caractérisé en ce que** l'ensemble inertiel mobile (1, 1') présentant un axe de symétrie (38) parallèle à l'axe y, il comprend un troisième et un quatrième peigne de compensation du biais en quadrature (10c, 10d), ces deux peignes (10c, 10d) de compensation étant respectivement symétriques des premier et deuxième peignes (10a, 10b) par rapport à l'intersection de l'axe de symétrie (32) parallèle à x et de l'axe de symétrie (38) parallèle à y.

6. Gyromètre selon l'une quelconque des revendications précédentes, **caractérisé en ce que** l'ensemble inertiel mobile (1) comprend une deuxième masse (30) apte à vibrer selon l'axe y de détection.

7. Gyromètre selon la revendication précédente, **caractérisé en ce qu'**il comprend une troisième masse (40) apte à vibrer en opposition de phase avec la deuxième masse (30) selon l'axe y de détection.

8. Gyromètre selon l'une quelconque des revendications précédentes, **caractérisé en ce que** l'ensemble inertiel mobile (1) comprend en outre au moins un peigne (20) interdigité d'ajustement de la fréquence de détection, qui présente deux entrefers e' identiques et qui est associé à une masse apte à vibrer selon l'axe y de détection.

**9.** Gyromètre selon la revendication précédente, **caractérisé en ce que** le peigne (20) d'ajustement de la fréquence de détection est disposé selon l'axe y.

**10.** Gyromètre selon l'une quelconque des revendications 6 à 9, **caractérisé en ce que** l'ensemble mobile (1) étant désigné premier ensemble mobile (1), il comprend un deuxième ensemble mobile (1') qui comprend les mêmes éléments que le premier ensemble mobile (1), et une structure de couplage (21, 22, 21') qui relie ces deux ensembles entre eux et permet un transfert d'énergie mécanique de vibration entre eux.

**11.** Gyromètre à simple ou double diapason selon la revendication précédente.

**Claims**

**1.** A gyrometer having a vibrating structure produced by micro-machining from a thin plate, which includes a mobile inertial assembly (1) comprising at least one mobile mass (50) capable of vibrating in the plane of the plate along an excitation axis x and along a detection axis y essentially perpendicular to the axis x, an interdigital detection comb (90) and an interdigital excitation comb (70), **characterised in that** it further comprises at least one additional interdigital comb (10 a) referred to as a quadrature bias compensation comb connected to the mass (50) having two asymmetric gaps e and $\lambda e$, $\lambda$ being a positive real number, in order to subject the mass, by the application of an adjustable DC voltage V to this comb, to an adjustable electrostatic coupling stiffness between the x axis and the y axis, allowing compensation of the quadrature bias of the gyrometer.

**2.** The gyrometer according to the previous claim, **characterised in that** the quadrature bias compensation comb(s) (10a) is/are disposed along the y axis.

**3.** The gyrometer according to any one of the previous claims, **characterised in that** the mobile inertial assembly (1, 1'), having an axis of symmetry (32) parallel to the x axis, comprises a second quadrature bias compensation comb (10b), the two compensation combs (10a, 10b) being disposed symmetrically relative to the axis of symmetry (32) and **in that** the second comb (10b) has two gaps along y symmetrical with the gaps of the first comb, relative to the axis of symmetry.

**4.** The gyrometer according to the previous claim, **characterised in that** the mobile inertial assembly (1, 1'), having an axis of symmetry (38) parallel to the y axis, comprises third and fourth quadrature bias compensation combs (10c, 10d), said two compensation combs (10c, 10d) being respectively symmetrical with the first and second combs (10a, 10b), relative to the axis of symmetry parallel to y (38).

**5.** The gyrometer according to claim 3, **characterised in that** the mobile inertial assembly (1, 1'), having an axis of symmetry (38) parallel to the y axis, comprises third and fourth quadrature bias compensation combs (10c, 10d), said two compensation combs (10c, 10d) being respectively symmetrical with the first and second combs (10a, 10b), relative to the intersection of the axis of symmetry (32) parallel to x and the axis of symmetry (38) parallel to y.

**6.** The gyrometer according to any one of the previous claims, **characterised in that** the mobile inertial assembly (1) comprises a second mass (30) capable of vibrating along the y axis of detection.

**7.** The gyrometer according to the previous claim, **characterised in that** it comprises a third mass (40) capable of vibration in phase opposition to the second mass (30) along the y axis of detection.

**8.** The gyrometer according to any one of the previous claims, **characterised in that** the mobile inertial assembly (1) further comprises at least one interdigital comb (20) for adjusting the detection frequency, having two identical gaps e' and which is associated with a mass capable of vibrating along the y axis of detection.

**9.** The gyrometer according to the previous claim, **characterised in that** the detection frequency adjustment comb (20) is disposed along the y axis.

**10.** The gyrometer according to any one of claims 6 to 9, **characterised in that** the mobile assembly (1), being designated first mobile assembly (1), comprises a second mobile assembly (1') which includes the same elements as the first mobile assembly (1), and a coupling structure (21, 22, 21') which links these two assemblies together and allows the transfer of vibration mechanical energy between them.

**11.** A gyrometer with single or twin tuning fork according to the previous claim.

**Patentansprüche**

**1.** Vibrationsgyrometer, erzeugt durch Mikrobearbeitung aus einer dünnen Platte, die eine träge Schwungbaugruppe (1) beinhaltet, die wenigstens eine Schwungmasse (50) umfasst, die in der Ebene der Platte entlang einer Erregungsachse x und entlang einer Detektionsachse y im Wesentlichen lotrecht zur x-Achse vibrieren kann, einen interdigitalen Detektionskamm (90) und einen interdigitalen Erregungskamm (70), **dadurch gekennzeichnet, dass** es ferner wenigstens einen zusätzlichen, Quadraturbias-Kompensationskamm genannten, interdigitalen Kamm (10a) umfasst, der mit der Masse (50) assoziiert ist und zwei asymmetrische Spalte e und λe aufweist, wobei λ eine positive reelle Zahl ist, um die Masse durch Anlegen einer regelbaren Gleichspannung V an diesen Kamm einer justierbaren elektrostatischen Kopplungssteifigkeit zwischen der x-Achse und der y-Achse auszusetzen, so dass der Quadraturbias des Gyrometers kompensiert werden kann.

**2.** Gyrometer nach dem vorherigen Anspruch, **dadurch gekennzeichnet, dass** der/die Quadraturbias-Kompensationskamm/-kämme (10a) entlang der y-Achse angeordnet ist/sind.

**3.** Gyrometer nach einem der vorherigen Ansprüche, **dadurch gekennzeichnet, dass** die träge Schwungbaugruppe (1, 1'), die eine Symmetrieachse (32) parallel zur x-Achse hat, einen zweiten Qaudraturbias-Kompensationskamm (10b) umfasst, wobei die beiden Kompensationskämme (10a, 10b) symmetrisch in Bezug auf die Symmetrieachse (32) angeordnet sind, und **dadurch**, dass der zweite Kamm (10b) entlang y zwei Spalte symmetrisch zu den Spalten des ersten Kamms in Bezug auf die Symmetrieachse hat.

**4.** Gyrometer nach dem vorherigen Anspruch, **dadurch gekennzeichnet, dass** die träge Schwungbaugruppe (1, 1'), die eine Symmetrieachse (38) parallel zur y-Achse hat, einen dritten und einen vierten Qaudraturbias-Kompensationskamm (10c, 10d) umfasst, wobei diese beiden Kompensationskämme (10c, 10d) jeweils symmetrisch zu dem ersten und dem zweiten Kamm (10a, 10b) in Bezug auf die Symmetrieachse parallel zu y (38) angeordnet sind.

**5.** Gyrometer nach Anspruch 3, **dadurch gekennzeichnet, dass** die träge Schwungbaugruppe (1, 1'), die eine Symmetrieachse (38) parallel zur y-Achse hat, einen dritten und einen vierten Quadraturbias-Kompensationskamm (10c, 10d) umfasst, wobei diese beiden Kompensationskämme (10c, 10d) jeweils symmetrisch zu dem ersten und dem zweiten Kamm (10a, 10b) in Bezug auf den Schnittpunkt der Symmetrieachse (32) parallel zu x und zur Symmetrieachse (38) parallel zu y sind.

**6.** Gyrometer nach einem der vorherigen Ansprüche, **dadurch gekennzeichnet, dass** die träge Schwungbaugruppe (1) eine zweite Masse (30) umfasst, die entlang der y-Detektionsachse vibrieren kann.

**7.** Gyrometer nach dem vorherigen Anspruch, **dadurch gekennzeichnet, dass** es eine dritte Masse (40) umfasst, die phasenmäßig entgegengesetzt zur zweiten Masse (30) entlang der y-Detektionsachse vibrieren kann.

**8.** Gyrometer nach einem der vorherigen Ansprüche, **dadurch gekennzeichnet, dass** die träge Schwungbaugruppe (1) ferner wenigstens einen interdigitalen Kamm (20) zum Justieren der Detektionsfrequenz mit zwei identischen Spalten e' umfasst, der mit einer Masse assoziiert ist, die entlang der y-Detektionsachse vibrieren kann.

**9.** Gyrometer nach dem vorherigen Anspruch, **dadurch gekennzeichnet, dass** der Kamm (20) zum Justieren der Detektionsfrequenz entlang der y-Achse angeordnet ist.

**10.** Gyrometer nach einem der Ansprüche 6 bis 9, **dadurch gekennzeichnet, dass** die Schwungbaugruppe (1), die als erste Schwungbaugruppe (1) bezeichnet wird, eine zweite Schwungbaugruppe (1'), die dieselben Elemente aufweist wie die erste Schwungbaugruppe (1), und eine Kopplungsstruktur (21, 22, 21') umfasst, die diese beiden Baugruppen miteinander verbindet und die Übertragung von mechanischer Vibrationsenergie dazwischen zulässt.

**11.** Gyrometer mit einer einfachen oder einer doppelten Abstimmgabel nach dem vorherigen Anspruch.

FIG.1a

FIG.1b

FIG.2a

FIG.2b

FIG.2c

FIG.3a

FIG.3b

FIG.4

EP 1 960 736 B1

FIG.5

**EP 1 960 736 B1**

**Documents brevets cités dans la description**

- WO 2004042324 A

**Littérature non-brevet citée dans la description**

- **YEH B Y et al.** Modelling and compensation of quadrature error for silicon MEMS microgyroscope. *POWER ELECTRONICS AND DRIVE SYSTEMS, 2001, PROCEEDINGS, 4TH IEEE INTERNATIONAL CONFERENCE ON, PISCATAWAY,* 22 Octobre 2001, vol. 2, ISBN 0-7803-7233-6, 871-876